# EUROPEAN PATENT APPLICATION

(11) **EP 4 675 880 A1**
(43) Date of publication of application: **07.01.2026**
(21) Application number: 24785027.4
(22) Date of filing: 07.02.2024
(51) Int. Cl.: H02J 3/32, H02J 7/00

(54) **ENERGY STORAGE SYSTEM**

(30) Priority: 06.04.2023 KR 20230045550
(71) Applicant: LG ENERGY SOLUTION, LTD., Seoul 07335 (KR)
(72) Inventor: KIM, Duk You, Daejeon 34122 (KR); LEE, Keun Wook, Daejeon 34122 (KR); YANG, Seong Yeol, Daejeon 34122 (KR)
(74) Representative: Plasseraud IP
(86) International application number: PCT/KR2024/001798
(87) International publication number: WO 2024/210316

(57) **Abstract**

An energy storage system (ESS) includes a plurality of battery units, a plurality of direct current (DC)-DC converters each connected to each of the plurality of battery units to convert an input voltage from a connected battery unit into an output voltage, and a controller configured to control the plurality of DC-DC converters such that a summed voltage of output voltages of the plurality of DC-DC converters is an alternating current (AC) voltage.

## Description

### [Technical Field]

### CROSS-REFERENCE TO RELATED APPLICATION

This application claims priority to and the benefit of Korean Patent Application No. 10-2023-0045550 filed in the Korean Intellectual Property Office on April 6, 2023, the entire content of which is incorporated herein by reference.

### TECHNICAL FIELD

Embodiments disclosed herein relate to an energy storage system.

### [Background Art]

An energy storage system (ESS) is a system that links new renewable energy, batteries storing power, and existing grid power. Recently, with the spread of smart grids, the expansion of new and renewable energy, and the emphasis on the efficiency and stability of power grids, demands for energy storage systems are increasing for power supply, demand control, and power quality improvement. The energy storage system has different output and capacity according to the purpose of use. To constitute a large-volume energy storage system, a plurality of battery systems are connectable to one another.

The energy storage system is evolving from an alternating current (AC)-coupled energy storage system into a direct current (DC)-coupled energy storage system. In the DC-coupled ESS system, a battery system and a grid have different voltage levels and different voltage types, a DC voltage for the battery system and an AC voltage for the grid. Thus, a DC-DC converter and a DC-AC inverter which are power conversion devices are essentially required between the battery system and the grid.

Among them, the DC-DC converter is mounted on every battery cell or battery module to function as the DC-DC converter for the whole system, and a structure having various advantages such as cell balancing, defective cell blocking, etc., is being developed. In this way, power consumption of the DC-DC converter in the energy storage system may be reduced, but power consumption occurring in the DC-AC inverter is still a problem to be overcome.

### [Disclosure]

### [Technical Problem]

Embodiments disclosed herein provide an energy storage system capable of generating an AC voltage by using a DC-DC converter at a stage of a battery cell, a battery module, or a battery pack.

Technical problems of the embodiments disclosed herein are not limited to the above-described technical problems, and other unmentioned technical problems would be clearly understood by one of ordinary skill in the art from the following description.

### [Technical Solution]

An energy storage system (ESS) includes a plurality of battery units, a plurality of direct current (DC)-DC converters each connected to each of the plurality of battery units to convert an input voltage from a connected battery unit into an output voltage, and a controller configured to control the plurality of DC-DC converters such that a summed voltage of output voltages of the plurality of DC-DC converters is an alternating current (AC) voltage.

In the energy storage system according to an embodiment disclosed herein, each of the plurality of DC-DC converters may be connected to a positive electrode and a negative electrode of each of the plurality of battery units, and the summed voltage may be applied to a grid system connected to the energy storage system.

In the energy storage system according to an embodiment disclosed herein, the plurality of DC-DC converters may be configured to perform a bypass function that causes a magnitude of the output voltage to be 0 V, and the controller may be further configured to control the plurality of DC-DC converters by using the bypass function such that the summed voltage of output voltages of the plurality of DC-DC converters is an AC voltage.

In the energy storage system according to an embodiment disclosed herein, the controller may be further configured to control the plurality of DC-DC converters to perform the bypass function according to a designated period.

In the energy storage system according to an embodiment disclosed herein, the plurality of DC-DC converters may be configured to perform a rise control function for causing the output voltage to be a voltage rising based on a designated slope and/or a drop control function for causing the output voltage to be a voltage dropping based on the designated slope, and the controller may be further configured to control the plurality of DC-DC converters by using the rise control function and the drop control function such that the summed voltage of output voltages of the plurality of DC-DC converters is an AC voltage.

In the energy storage system according to an embodiment disclosed herein, the controller may be further configured to control the plurality of DC-DC converters such that the summed voltage has a magnitude, a phase, and/or a frequency corresponding to a required AC voltage of the grid system.

In the energy storage system according to an embodiment disclosed herein, the controller may be further configured to control the plurality of DC-DC converters based on a state of the plurality of battery units.

The energy storage system according to an embodiment disclosed herein may further include at least one battery management system (BMS) configured to manage the state of the plurality of battery units, in which the controller may be further configured to obtain state data of the plurality of battery units from the at least one BMS and determine the state of the plurality of battery units based on the state data.

In the energy storage system according to an embodiment disclosed herein, the state data may include data related to at least one of a voltage, a current, a temperature, a state of charge (SOC), or a state of health (SOH) of the plurality of battery units.

In the energy storage system according to an embodiment disclosed herein, each of the plurality of battery units may include a battery cell, a battery module, a battery pack, or a battery rack.

### [Advantageous Effects]

According to embodiments disclosed herein, an AC voltage required for a grid system may be generated merely with a DC-DC converter, thereby omitting a DC-AC inverter in an energy storage system and thus providing advantages in terms of power efficiency, power density, and temperature when compared to an existing energy storage system.

Moreover, various effects recognized directly or indirectly from the disclosure may be provided.

### [Description of Drawings]

FIG. 1 is a block diagram showing conventional energy storage system and grid system.
FIG. 2 is a block diagram showing an energy storage system and a grid system, according to an embodiment.
FIG. 3 is a view for describing a connection structure between a battery unit and a direct current (DC)-DC converter in an energy storage system, according to an embodiment.
FIGS. 4A to 4C are views for describing an example in which a plurality of DC-DC converters in an energy storage system sequentially perform a designated function according to an embodiment.
FIG. 5 is a view for describing a connection structure among a battery unit, a DC-DC converter, and a switch in an energy storage system, according to an embodiment.

### [Mode for Invention]

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present document and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

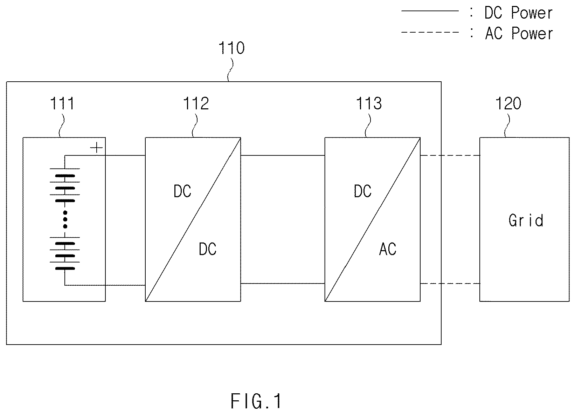

FIG. 1 is a block diagram showing conventional energy storage system and grid system.

Referring to FIG. 1, a conventional energy storage system 110 is connected to a grid system 120, and includes a battery unit 111, a direct current (DC)-DC converter 112, and a DC-alternating current (AC) inverter 113.

A minimum unit of a battery that stores power in an energy storage system (ESS) is generally a battery cell. A serial/parallel combination of battery cells constitutes a battery module, and a plurality of battery modules constitute a battery pack or a battery rack. The battery unit 111 shown in FIG. 1 may be a battery pack or a battery rack.

The conventional energy storage system 110 may transmit power to the grid system 120 (in case of discharging) or receive power from the grid system 120 (in case of charging). Herein, the grid system 120 requires AC power, such that power transmitted between the energy storage system 110 and the grid system 120 is AC power.

More specifically, in case of discharging, the conventional energy storage system 110 converts DC output power of the battery unit 111 into AC power through the DC-DC converter 112 and the DC-AC inverter 113 and transmits the AC power to the grid system 120. In case of charging, the conventional energy storage system 110 converts AC power transmitted from the grid system 120 into DC power through the DC-AC inverter 113 and the DC-DC converter 112 and transmits the DC power to the battery unit 111.

That is, the conventional energy storage system 110 essentially requires the DC-AC inverter 113 for power transmission/reception described above. However, due to such a structure, while power passes through the DC-AC inverter 113, power consumption occurs, lowering power efficiency, or due to heat emission caused by inversion of the DC-AC inverter 113, the temperature of the entire system excessively increases.

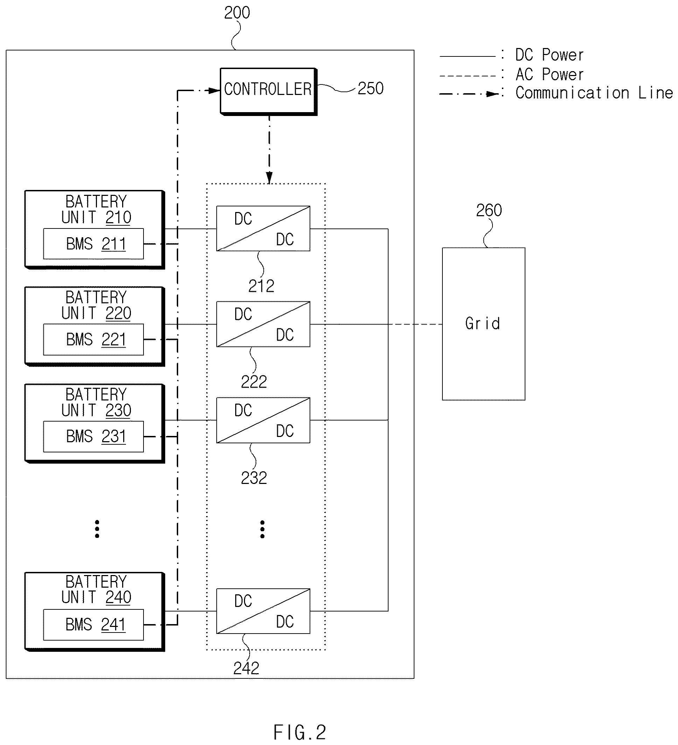

FIG. 2 is a block diagram showing an energy storage system and a grid system, according to an embodiment.

Referring to FIG. 2, an energy storage system 200 may be connected to a grid system 260. According to an embodiment, the energy storage system 200 and the grid system 260 may transmit and receive AC power. For example, during discharging, the energy storage system 200 may transmit AC power to the grid system 260. In another example, during charging, the energy storage system 200 may receive AC power from the grid system 260.

According to an embodiment, the energy storage system 200 may include a plurality of battery units 210, 220, 230, and 240, a plurality of DC-DC converters 212, 222, 232, and 242, and a controller 250. According to an embodiment, the energy storage system 200 shown in FIG. 2 may further include at least one component (e.g., a battery system controller (BSC), an energy management system (EMS), or a power management system (PMS)) in addition to components shown in FIG. 2.

A battery that stores power in the energy storage system 200 is generally implemented in such a way that a plurality of battery modules having a plurality of battery cells connected in series/in parallel constitute a battery pack or a battery rack and a plurality of battery packs or a plurality of battery racks constitute a battery bank. Each of the plurality of battery units 210, 220, 230, and 240 shown in FIG. 2 may be a battery cell, a battery module, a battery pack, or a battery rack.

According to an embodiment, the plurality of battery units 210, 220, 230, and 240 may be connected in series or in parallel.

According to an embodiment, battery management systems (BMSs) 211, 221, 231, and 241 may be respectively installed in the plurality of battery units 210, 220, 230, and 240. The BMSs 211, 221, 231, and 241 may respectively manage states of the battery units 210, 220, 230, and 240 managed by them. According to an embodiment, the BMS 211, 221, 231, or 241 may monitor a voltage, a current, and/or a temperature of the battery unit 210, 220, 230, or 240 and calculate an SOC and/or an SOH based on a monitoring result. The BMS 211, 221, 231, or 241 may control charging/discharging based on the state of the battery unit 210, 220, 230, or 240.

According to an embodiment, the BMS 211, 221, 231, or 241 may transmit state data related to at least one of the voltage, the current, the temperature, the SOC, or the SOH of the battery unit 210, 220, 230, or 240 to the controller 250.

According to an embodiment, the plurality of DC-DC converters 212, 222, 232, and 242 may be respectively connected to the plurality of battery units 210, 220, 230, and 240. For example, the first DC-DC converter 212 may be connected to the first battery unit 210, the second DC-DC converter 222 may be connected to the second battery unit 220, the third DC-DC converter 232 may be connected to the third battery unit 230, and the N^{th} DC-DC converter 242 may be connected to the N^{th} battery unit 240 (N is a natural number of 4 or greater).

According to an embodiment, the plurality of DC-DC converters 212, 222, 232, and 242 may be directly or indirectly connected to the grid system 260. A summed voltage of output voltages of the plurality of DC-DC converters 212, 222, 232, and 242 may be applied to the grid system 260 through the connection. According to an embodiment, a predetermined filter may be connected between the plurality of DC-DC converters 212, 222, 232, and 242 and the grid system 260. In this case, the predetermined filter may be implemented with an AC transformer that transforms the summed voltage of the output voltages of the plurality of DC-DC converters 212, 222, 232, and 242 into a required voltage of the grid system 260. For example, the predetermined filter may transform the summed voltage such that a median voltage value of the AC voltage that is the summed voltage is 0 V.

According to an embodiment, the plurality of DC-DC converters 212, 222, 232, and 242 may convert an input voltage into an output voltage of a designated magnitude. For example, the DC-DC converter 212, 222, 232, or 242 may be implemented as a converter of various types such as a full-bridge converter, a half-bridge converter, a flyback converter, etc. The DC-DC converter 212, 222, 232, or 242 may include a separate controller, an input switching set, a primary coil, a secondary coil, an output switching set, and a capacitor.

According to an embodiment, the plurality of DC-DC converters 212, 222, 232, and 242 may be bidirectional converters. For example, conversion may be performed from the plurality of battery units 210, 220, 230, and 240 to the grid system 260, and an input of the plurality of DC-DC converters 212, 222, 232, and 242 may be connected to the plurality of battery units 210, 220, 230, and 240, and an output of the plurality of DC-DC converters 212, 222, 232, and 242 may be connected to the grid system 260. In another example, when conversion is performed from the grid system 260 to the plurality of battery units 210, 220, 230, and 240, the input of the plurality of DC-DC converters 212, 222, 232, and 242 may be connected to the grid system 260, and the output of the plurality of DC-DC converters 212, 222, 232, and 242 may be connected to the plurality of battery units 210, 220, 230, and 240.

According to an embodiment, the plurality of DC-DC converters 212, 222, 232, and 242 may be configured to perform a particular function.

According to an embodiment, the particular function may include a bypass function such that a magnitude of an output voltage is 0 V. The DC-DC converter 212, 222, 232, or 242 may block power output from the connected battery unit 210, 220, 230, or 240 by performing the bypass function.

According to an embodiment, the particular function may include a rise control function for causing the output voltage to be a voltage rising based on a designated slope and/or a drop control function for causing the output voltage to be a voltage dropping based on the designated slope.

According to an embodiment, the controller 250 may include a central processing unit, an application processor, a graphic processing unit, a neural processing unit (NPU), an image signal processor, a sensor hub processor, or a communication processor.

In an embodiment, the controller 250 may execute software to control at least one other components (e.g., the BMS 211, 221, 231, or 241, the DC-DC converter 212, 222, 232, or 242) of the energy storage system 200 connected to the controller 250 and process or compute various data.

According to an embodiment, the controller 250 may control the plurality of DC-DC converters 212, 222, 232, and 242 such that the summed voltage of the output voltages of the plurality of DC-DC converters 212, 222, 232, and 242 is an AC voltage. According to an embodiment, the controller 250 may control the plurality of DC-DC converters 212, 222, 232, and 242 such that the summed voltage has a magnitude, a phase, and/or a frequency corresponding to a required AC voltage of the grid system 260.

According to an embodiment, the controller 250 may control the plurality of DC-DC converters 212, 222, 232, and 242 by using the bypass function such that the summed voltage is an AC voltage. The controller 250 may control the number of DC-DC converters 212, 222, 232, and 242 from which a voltage is output, through the bypass function. The controller 250 may also control a magnitude of the output voltage of the DC-DC converters 212, 222, 232, or 242 from which a voltage is output.

According to an embodiment, the controller 250 may control the plurality of DC-DC converters 212, 222, 232, and 242 to perform the bypass function for a designated time.

According to an embodiment, the controller 250 may control the plurality of DC-DC converters 212, 222, 232, and 242 to perform the bypass function according to a designated period. Herein, the designated period may be set to be the same or different for the plurality of DC-DC converters 212, 222, 232, and 242. The designated period may be set based on a magnitude, a phase, and/or a frequency corresponding to the required AC voltage of the grid system 260. For example, to cause the summed voltage to be the required AC voltage, the designated period may be set to be shorter than the period of the required AC voltage of the grid system 260.

According to an embodiment, the controller 250 may control the plurality of DC-DC converters 212, 222, 232, and 242 to sequentially perform the bypass function in a designated order.

As such, by controlling the magnitude of the DC output voltage of the plurality of DC-DC converters 212, 222, 232, and 242, the controller 250 may control the plurality of DC-DC converters 212, 222, 232, and 242 such that the summed voltage is an AC voltage (specifically, the required AC voltage of the grid system 260).

According to an embodiment, the controller 250 may control the plurality of DC-DC converters 212, 222, 232, and 242 by using a rise control function and a drop control function such that the summed voltage is an AC voltage. For example, the controller 250 may control the DC-DC converter 212, 222, 232, or 242 to output a rising or dropping voltage based on a designated slope. Herein, the designated slope may be set based on a magnitude, a phase, and/or a frequency corresponding to the required AC voltage of the grid system 260. The controller 250 may transmit an AC voltage in a gentle form to the grid system 260 through the rise control function and the drop control function.

According to an embodiment, the controller 250 may control the plurality of DC-DC converters 212, 222, 232, and 242 by using all of the bypass function, the rise control function, and the drop control function such that the summed voltage is an AC voltage. For example, the controller 250 may control at least some of the plurality of DC-DC converters 212, 222, 232, and 242 to perform the bypass function and the others to perform the rise control function and/or the drop control function.

According to an embodiment, the controller 250 may control the plurality of DC-DC converters 212, 222, 232, and 242 based on the state of the plurality of battery units 210, 220, 230, and 240.

According to an embodiment, the controller 250 may obtain state data of the plurality of battery units 210, 220, 230, and 240 from at least one BMS 211, 221, 231, and/or 241. The controller 250 may determine the state of the plurality of battery units 210, 220, 230, and 240 based on the obtained state data. For example, the controller 250 may determine the state of the plurality of battery units 210, 220, 230, and 240 as an abnormal state or a normal state.

According to an embodiment, the controller 250 may control the plurality of DC-DC converters 212, 222, 232, and 242 based on the determined state. For example, the controller 250 may control the DC-DC converter 212, 222, 232, or 242 connected to the battery unit 212, 222, 232, or 242 determined to be in the abnormal state to perform the bypass function.

For example, the controller 250 may determine the battery unit 210, 220, 230, or 240 to be in the abnormal state when the output voltage, the SOC, or the SOH of the battery unit 210, 220, 230, or 240 is less than or equal to a designated level. In another example, the controller 250 may determine the battery unit 210, 220, 230, or 240 to be in the abnormal state when the temperature of the battery unit 210, 220, 230, or 240 is greater than or equal to a designated temperature.

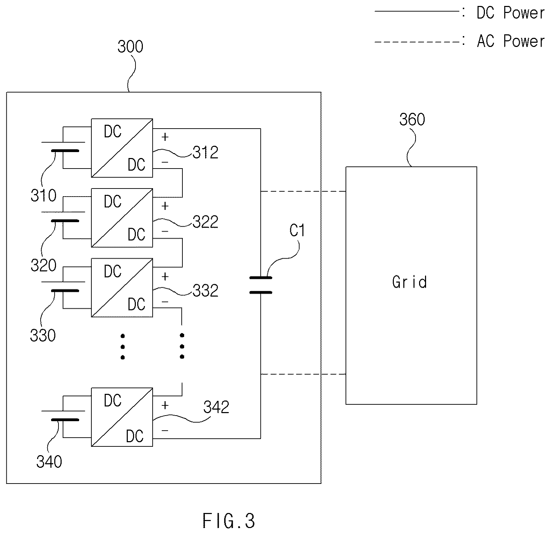

FIG. 3 is a view for describing a connection structure between a battery unit and a DC-DC converter in an energy storage system, according to an embodiment.

An energy storage system 300 and a grid system 360 shown in FIG. 3 may respectively have the same configurations as the energy storage system 200 and the grid system 260 shown in FIG. 2.

Referring to FIG. 3, a plurality of DC-DC converters 312, 322, 332, and 342 may be respectively connected to positive electrodes and negative electrodes of a plurality of battery units 310, 320, 330, and 340. That is, the plurality of DC-DC converters 312, 322, 332, and 342 may be respectively connected to convert output voltages of the plurality of battery units 310, 320, 330, and 340. Thus, a controller (e.g., the controller 250 of FIG. 2) of the energy storage system 300 may separately control the output voltage of each of the plurality of battery units 310, 320, 330, and 340.

According to an embodiment, connection units between the plurality of DC-DC converters 310, 320, 330, and 340 and the plurality of battery units 312, 322, 332, and 342 may be connected to each other in series. In a corresponding embodiment, a positive output terminal of the first DC-DC converter 312 and a negative output terminal of the N^{th} DC-DC converter 342 may be connected to each other through a storage element C1 serving to store energy. The positive output terminal of the first DC-DC converter 312 may be connected to a positive input terminal of the grid system 360, and the negative output terminal of the N^{th} DC-DC converter 342 may be connected to a negative input terminal of the grid system 360. With such a connection structure, the summed voltage of the output voltages of the plurality of DC-DC converters 312, 322, 332, and 342 may be stored in the storage element C1 or may be applied to the grid system 360.

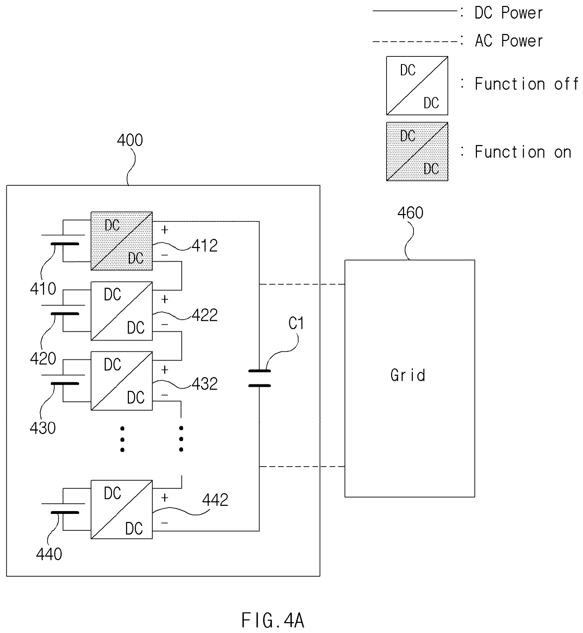

FIGS. 4A to 4C are views for describing an example in which a plurality of DC-DC converters in an energy storage system sequentially perform a specific function according to an embodiment. Herein, the specified function may include the bypass function, the rise control function, and/or the drop control function.

An energy storage system 400 and a grid system 460 shown in FIGS. 4A to 4C may respectively have the same configurations as the energy storage system 200 and the grid system 260 shown in FIG. 2.

Referring to FIG. 4A, a first DC-DC converter 412 among a plurality of DC-DC converters 412, 422, 432, and 442 may perform the specified function, and the other DC-DC converters 422, 432, and 442 may not perform the specified function. When the specified function is the bypass function, the summed voltage applied to the grid system 460 may be a summed voltage of voltages into which voltages output from the other battery units 420, 430, and 440 than the first battery unit 410 are converted by the other DC-DC converters 422, 432, and 442.

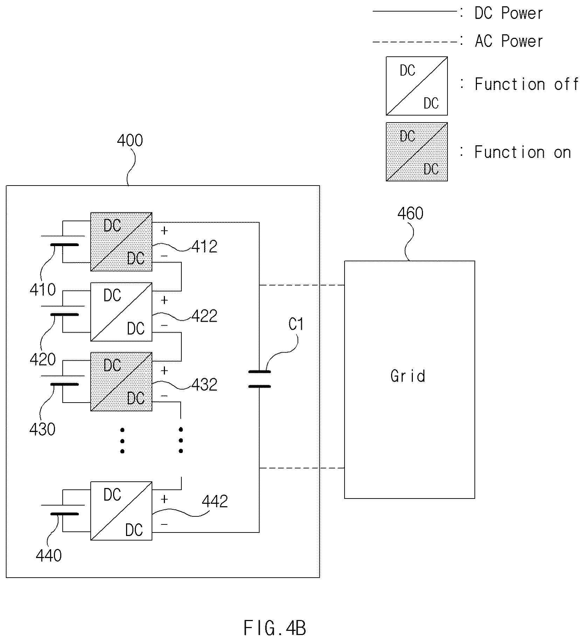

Referring to FIG. 4B, among the plurality of DC-DC converters 412, 422, 432, and 442, the first DC-DC converter 412 and the third DC-DC converter 432 may perform the specified function, and the other DC-DC converters 422 and 442 may not perform the specified function. When the specified function is the bypass function, the summed voltage applied to the grid system 460 may be a summed voltage of voltages into which voltages output from the other battery units 420 and 440 than the first battery unit 410 and the third battery unit 430 are converted by the other DC-DC converters 422 and 442.

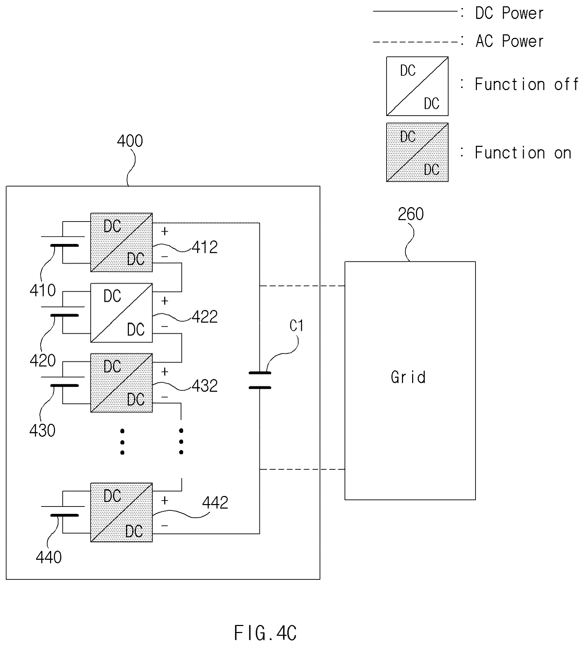

Referring to FIG. 4C, among the plurality of DC-DC converters 412, 422, 432, and 442, the first DC-DC converter 412, the third DC-DC converter 432, and the N^{th} DC-DC converter 442 may perform the specified function, and the other DC-DC converter 422 may not perform the specified function. When the specified function is the bypass function, the summed voltage applied to the grid system 460 may be a summed voltage of voltages into which a voltage output from the other battery unit 420 than the first battery unit 410, the third battery unit 430, and the N^{th} battery unit 440 is converted by the other DC-DC converter 422.

As such, the controller 400 may control the plurality of DC-DC converters 400 to perform or not to perform the specified function such that the summed voltage of the output voltages of the plurality of DC-DC converters 400 is an AC voltage. More specifically, a controller (e.g., the controller 250 of FIG. 2) in the energy storage system 400 may control the plurality of DC-DC converters 400 to perform or not to perform the specified function.

In an embodiment, the energy storage system 400 may control the plurality of DC-DC converters 412, 422, 432, and 442 to sequentially perform the specified function in a designated order. For example, the energy storage system 400 may control the first DC-DC converter 412, the third DC-DC converter 432, and the N^{th} DC-DC converter 442 in that order (i.e., in order of FIG. 4A, FIG. 4B, and FIG. 4C) to perform the specified function. This may be a control for generating a part of an AC voltage waveform in which a voltage drops. However, the designated order is not limited thereto and may be set variously such that the summed voltage is the required AC voltage.

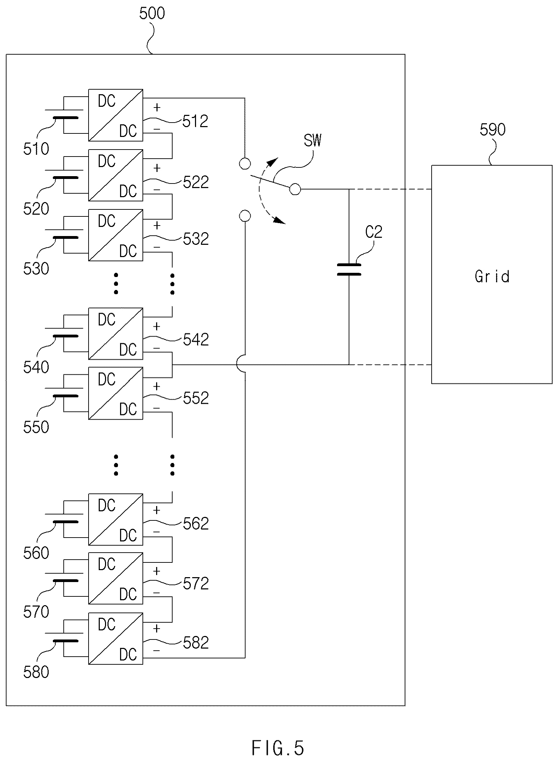

FIG. 5 is a view for describing a connection structure among a battery unit, a DC-DC converter, and a switch in an energy storage system, according to an embodiment.

An energy storage system 500 and a grid system 590 shown in FIG. 5 may respectively have the same configurations as the energy storage system 200 and the grid system 260 shown in FIG. 2.

Referring to FIG. 5, the energy storage system 500 may include a plurality of battery units 510, 520, 530, 540, 550, 560, 570, and 580, a plurality of DC-DC converters 512, 522, 532, 542, 552, 562, 572, and 582, a switch SW, and a storage element C2.

The plurality of DC-DC converters 512, 522, 532, 542, 552, 562, 572, and 582 may be respectively connected to positive electrodes and negative electrodes of the plurality of battery units 510, 520, 530, 540, 550, 560, 570, and 580. That is, the plurality of DC-DC converters 512, 522, 532, 542, 552, 562, 572, and 582 may be respectively connected to convert the output voltages of the plurality of battery units 510, 520, 530, 540, 550, 560, 570, and 580. With this connection structure, a controller (e.g., the controller 250 of FIG. 2) of the energy storage system 500 may separately control the output voltage of each of the plurality of battery units 510, 520, 530, 540, 550, 560, 570, and 580.

According to an embodiment, connection units between the first battery unit 510, the second battery unit 520, the third battery unit 530, and the N^{th} battery unit 540 and the first DC-DC converter 512, the second DC-DC converter 522, the third DC-DC converter 532, and the N^{th} DC-DC converter 542 may be connected to each other in series. According to an embodiment, connection units between the (N+1)^{th} battery unit 550, the (2N-2)^{th} battery unit 560, the (2N-1)^{th} battery unit 270, and the 2N^{th} battery unit 580, and the (N+1)^{th} DC-DC converter 552, the (2N-2)^{th} DC-DC converter 562, the (2N-1)^{th} DC-DC converter 572, and the 2N^{th} DC-DC converter 582 may be connected to each other in series. Herein, a negative output terminal of the N^{th} DC-DC converter 542 and a positive output terminal of the (N+1)^{th} DC-DC converter may be connected to each other.

According to an embodiment, an end of the storage element C2 serving to store energy may be connected to the switch SW, and the other end may be connected to the negative output terminal of the N^{th} DC-DC converter 542 and the positive output terminal of the (N+1)^{th} DC-DC converter. The switch SW may be configured to connect an end of the storage element C2 to the positive output terminal of the first DC-DC converter 512 or the negative output terminal of the 2N^{th} DC-DC converter 582.

With this connection structure, when the switch SW is in connection to the positive output terminal of the first DC-DC converter 512, a first summed voltage of output voltages of the first DC-DC converter 512, the second DC-DC converter 522, the third DC-DC converter 532, ..., and the N^{th} DC-DC converter 542 may be stored in the storage element C1 or may be applied to the grid system 590. When the switch SW is in connection to the negative output terminal of the 2N^{th} DC-DC converter 582, a second summed voltage of output voltages of the (N+1)^{th} DC-DC converter 552, the (2N-2)^{th} DC-DC converter 562, the (2N-1)^{th} DC-DC converter 572, and the 2N^{th} DC-DC converter 582 may be stored in the storage element C1 or may be applied to the grid system 590.

Herein, the first summed voltage and the second summed voltage stored in the storage element C1 or applied to the grid system 590 may have opposite directions. For example, the first summed voltage may have a positive value, and the second summed voltage may have a negative value. Thus, the energy storage system 500 may control a median voltage value of an AC voltage applied to the grid system 490 to be 0 V without a separate filter. To this end, a predetermined period in which connection of the switch SW is changed may be set to 1/2 of a required AC voltage period of the grid system 590.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. An energy storage system (ESS) comprising:
a plurality of battery units;
a plurality of direct current (DC)-DC converters each connected to each of the plurality of battery units to convert an input voltage from a connected battery unit into an output voltage; and
a controller configured to control the plurality of DC-DC converters such that a summed voltage of output voltages of the plurality of DC-DC converters is an alternating current (AC) voltage.

2. The energy storage system of claim 1, wherein each of the plurality of DC-DC converters is connected to a positive electrode and a negative electrode of each of the plurality of battery units, and
the summed voltage is applied to a grid system connected to the energy storage system.

3. The energy storage system of claim 1, wherein the plurality of DC-DC converters are configured to perform a bypass function that causes a magnitude of the output voltage to be 0 V, and
the controller is further configured to control the plurality of DC-DC converters by using the bypass function such that the summed voltage of output voltages of the plurality of DC-DC converters is an AC voltage.

4. The energy storage system of claim 3, wherein the controller is further configured to control the plurality of DC-DC converters to perform the bypass function according to a designated period.

5. The energy storage system of claim 1, wherein the plurality of DC-DC converters are configured to perform a rise control function for causing the output voltage to be a voltage rising based on a designated slope and/or a drop control function for causing the output voltage to be a voltage dropping based on the designated slope, and
the controller is further configured to control the plurality of DC-DC converters by using the rise control function and the drop control function such that the summed voltage of output voltages of the plurality of DC-DC converters is an AC voltage.

6. The energy storage system of claim 1, wherein the controller is further configured to control the plurality of DC-DC converters such that the summed voltage has a magnitude, a phase, and/or a frequency corresponding to a required AC voltage of the grid system.

7. The energy storage system of claim 1, wherein the controller is further configured to control the plurality of DC-DC converters based on a state of the plurality of battery units.

8. The energy storage system of claim 7, further comprising at least one battery management system (BMS) configured to manage the state of the plurality of battery units,
wherein the controller is further configured to:
obtain state data of the plurality of battery units from the at least one BMS; and
determine the state of the plurality of battery units based on the state data.

9. The energy storage system of claim 8, wherein the state data comprises data related to at least one of a voltage, a current, a temperature, a state of charge (SOC), or a state of health (SOH) of the plurality of battery units.

10. The energy storage system of claim 1, wherein each of the plurality of battery units comprises a battery cell, a battery module, a battery pack, or a battery rack.

11. An energy storage system (ESS) comprising:
a plurality of battery units; and
a plurality of direct current (DC)-DC converters each having an input terminal electrically connected to a positive electrode and a negative electrode of each of the plurality of battery units to convert an input voltage from a connected battery unit into an output voltage,
wherein connection units between each of the plurality of battery units and each of the plurality of DC-DC converters are connected to each other in series, and
the plurality of DC-DC converters and the grid system are electrically connected such that at least a part of a summed voltage of output voltages of the plurality of DC-DC converters is applied to a grid system.

12. The energy storage system of claim 11, wherein a positive output terminal of a first DC-DC converter among the plurality of DC-DC converters is electrically connected to a positive input terminal of the grid system,
a negative output terminal of a second DC-DC converter among the plurality of DC-DC converters is electrically connected to a negative input terminal of the grid system, and
positive output terminals of the other DC-DC converters than the first DC-DC converter and the second DC-DC converter among the plurality of DC-DC converters are electrically connected to a negative output terminal of an adjacent DC-DC converter.

13. The energy storage system of claim 12, further comprising a storage element electrically connected to the positive output terminal of the first DC-DC converter and the negative output terminal of the second DC-DC converter.

14. The energy storage system of claim 11, further comprising a switch configured to selectively connect a positive output terminal of the first DC-DC converter among the plurality of 2N DC-DC converters or a negative output terminal of a 2N^{th} DC-DC converter among the plurality of DC-DC converters to the positive input terminal of the grid system, wherein N is a natural number,
wherein the positive output terminals of the other DC-DC converters than the first DC-DC converter and the 2N^{th} DC-DC converter among the plurality of DC-DC converters are electrically connected to a negative output terminal of an adjacent DC-DC converter, and
a negative output terminal of an N^{th} DC-DC converter among the plurality of DC-DC converters is electrically connected to a positive output terminal of (N+1)^{th} DC-DC converter among the plurality of DC-DC converters and the negative input terminal of the grid system.

15. The energy storage system of claim 14, further comprising a storage element el ectrically connected to a first end of the switch at which the switch is electrically connec ted to the grid system and the negative output terminal of the N^{th} DC-DC converter.
